# EUROPÄISCHE PATENTSCHRIFT

(11) **EP 1 015 283 B1**
(45) Veröffentlichungstag und Bekanntmachung des Hinweises auf die Patenterteilung: **24.07.2002**
(21) Anmeldenummer: 98947495.2
(22) Anmeldetag: 01.09.1998
(51) Int. Cl.: B60R 21/32

(54) **INSASSENSCHUTZEINRICHTUNG FÜR EIN FAHRZEUG**
MOTOR VEHICLE PASSENGER SAFETY DEVICE
DISPOSITIF DE PROTECTION DES OCCUPANTS D'UN VEHICULE

(30) Priorität: 27.09.1997 DE 19742768
(43) Veröffentlichungstag der Anmeldung: 05.07.2000
(73) Patentinhaber: Volkswagen Aktiengesellschaft, 38436 Wolfsburg (DE)
(72) Erfinder: BIEWENDT, Marcus, D-38302 Wolfenbüttel (DE); BERGMANN, Rolf, D-38518 Gifhorn (DE); RITTERS, Ernst-Wilhelm, D-38108 Braunschweig (DE); SCHÜTZ, Joachim, D-38489 Hanum (DE)
(86) Internationale Anmeldenummer: EP9805537
(87) Internationale Veröffentlichungsnummer: WO9916645

(56) Entgegenhaltungen:
- DE-A- 4 112 579
- DE-A- 4 222 595
- DE-A- 19 522 684
- DE-A- 19 526 619
- GB-A- 2 289 786
- US-A- 5 338 063

## Beschreibung

Die Erfindung betrifft eine Insassenschutzeinrichtung für ein Fahrzeug gemäß dem Oberbegriff des Patentanspruchs 1.

Eine gattungsgemäße Insassenschutzeinrichtung ist bekannt geworden aus der DE 19526619-A1 (B60R21/32). Dort wird in schematischer Darstellung die Arbeitsweise verschiedener Sicherheitseinrichtungen, insbesondere im Hinblick auf einen Seitenaufprall, beschrieben. Im Vordergrund steht dabei ein Vorschlag, die Anordnung von Seitenaufprall-Sensoren zu vereinfachen. Im übrigen wird die Arbeitsweise einzelner Sicherheitseinrichtungen für unterschiedliche Unfallszenarien beschrieben.

In der DE 19522684-A1 (B60R22/26) wird ein Sicherheitsgurtsystem mit einem Gurtschloßstraffer beschrieben, der auch bei seitlichen Aufprallbelastungen auslöst. Insbesondere in der Beschreibungseinleitung dieser Schrift wird darauf hingewiesen, daß bei Seitenaufprallbelastungen auf ein Kraftfahrzeug trotz angelegtem Sicherheitsgurt Relativbewegungen zwischen dem Fahrzeuginsassen und dem entsprechenden Fahrzeugsitz auftreten können. Bei einer Seitenaufprallbelastung wird nämlich die B-Säule nach innen gedrückt und dadurch näher zum Fahrzeuginsassen und zum Fahrzeugsitz hin bewegt. Ein zu diesem Zeitpunkt bereits geklemmter oder mittels einer Straffereinrichtung gestraffter Sicherheitsgurt erfährt durch die um einen gewissen Intrusionsbetrag erfolgende Querverschiebung der B-Säule eine entsprechende Gurtlose, bevor auch der Fahrzeugsitz selbst durch weiteres Eindringen des Kollisionskörpers seitlich verschoben wird. Durch diese Gurtlose ist der Fahrzeuginsasse auf dem Sitz nicht mehr ausreichend fixiert, somit auch nicht optimal gesichert. Zur Lösung dieses Problems wird vorgeschlagen, daß der Sicherheitsgurt in einem Sitzbereich oberhalb einer Schulter des Fahrzeuginsassen durch eine sitzfeste Führung hindurchgeführt ist. Dieser Führung ist eine Gurtklemmvorrichtung zugeordnet. Hinweise auf das Zusammenwirken eines solchen Sicherheitsgurtsystems mit Seitenairbag-Einrichtungen sind dieser Schrift nicht entnehmbar.

Vor diesem Hintergrund liegt der Erfindung die Aufgabe zugrunde, bei gattungsgemäßen Insassenschutzeinrichtungen die Verletzungsgefahr für Fahrzeuginsassen zu minimieren.

Diese Aufgabe wird gelöst mit einer Insassenschutzeinrichtung gemäß den Merkmalen des Patentanspruchs 1. Die Unteransprüche beinhalten besonders zweckmäßige Weiterbildung der Erfindung.

Erfindungsgemäß wird also bei einer gattungsgemäßen Insassenschutzeinrichtung dafür gesorgt, daß der Seitenairbag von der Steuereinrichtung zeitlich stets vor der Straffereinrichtung aktivierbar ist. Durch diese Maßnahme wird sichergestellt, daß einerseits schnellstmöglich gegenüber dem eindringenden Kollisionskörper ein Rückhalteschutz aufgebaut wird und andererseits der Sicherheitsgurt nicht nach erfolgter Straffung noch eine Gurtlose erfahren kann, weil in der oben beschriebenen Weise die B-Säule noch nach innen gedrückt wird und so auch am gestrafften Gurt noch eine Gurtlose erzeugt. Vorteilhaft an dieser Maßnahme ist, daß an bereits vorhandenen Sicherheitseinrichtungen in Fahrzeugen keinerlei Konstruktionsänderungen an den beteiligten Sicherheitskomponenten vorzunehmen sind. Die ohnehin vorhandene Steuereinrichtung ist lediglich auf das vorstehend beschriebene Zeitverhalten hin anzupassen. Die Nachzeitigkeit von Seitenairbag-Zündung einerseits und Straffer-Zündung andererseits kann neben einer Veränderung der Zündzeitpunkte in der Steuereinrichtung auch anderweitig ergänzend oder alternativ realisiert werden. So kann beispielsweise eine zusätzliche Sensorik vorgesehen sein, die den Zeitpunkt der beginnenden Fahrzeugsitzverschiebung zur Seite erfaßt. Mit Bezug auf ein Auslösesignal von dieser zusätzlichen Sensorik kann die Straffereinrichtung gesondert vom Seitenairbag aktiviert werden. Mit einer solchen Maßnahme würden fahrzeugspezifische Einbaugegebenheiten für die einzelnen Sicherheitssysteme gut berücksichtigt werden können. Die erfindungsgemäße Konzeption ist vorteilhaft auch mit Gurtklemmeinrichtungen kombinierbar.

Ein weiterer Vorteil der Erfindung ist darin zu sehen, daß für sämtliche der beteiligten Sicherheitskomponenten - also für Seitenairbag, Straffer und Sicherheitsgurt - konventionelle Systeme eingesetzt werden können. Dabei ist für die Bemessung des Zeitabstandes zwischen den unterschiedlichen Zündzeitpunkten jedoch die spezifische Charakteristik einzelner Systeme zu berücksichtigen. Als Einflußgröße für die Vorgabe eines festen Zeitabstandes Δt sind die fahrzeugspezifische Rohbaukonstruktion, die Anordnung der Sitze relativ zu Seitenlängsträgern bzw. Schwellern und die Zündcharakteristiken der jeweils verwendeten pyrotechnischen Treibsätze in den Sicherheitskomponenten Straffer und Airbag zu berücksichtigen.

Ein vorteilhaftes Ausführungsbeispiel der Erfindung ist in der Zeichnung schematisch dargestellt. Es zeigt
- Figur 1:: in schematisierter Darstellung eine Vorderansicht der erfindungsgemäßen Sicherheitsschutzeinrichtung und
- Figur 2:: ein Diagramm zur Beschreibung des Zeitverhaltens der erfindungsgemäßen Insassenschutzeinrichtung.

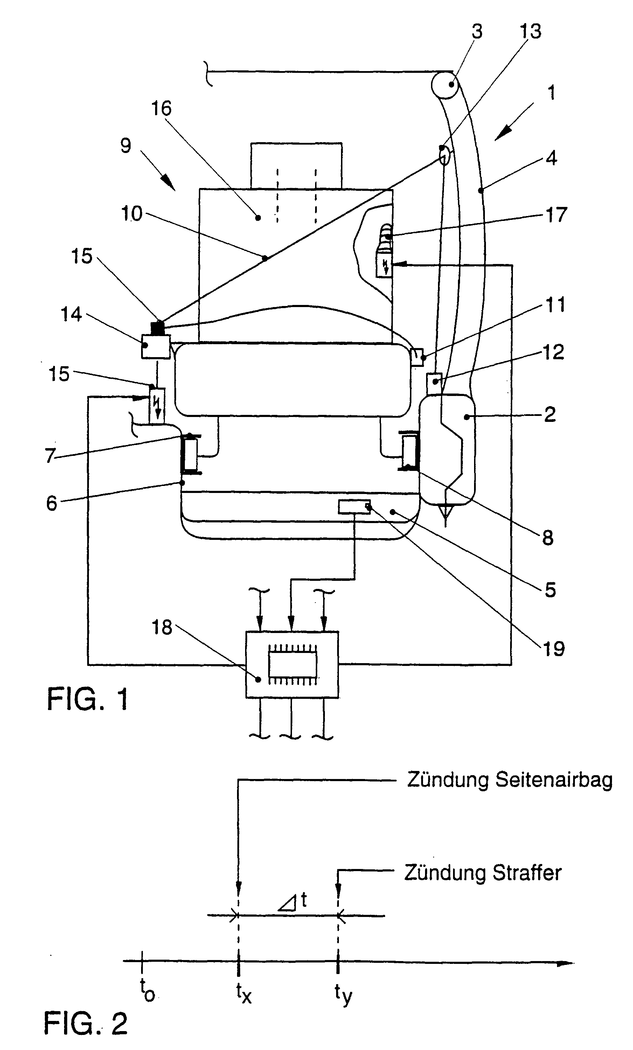

Man erkennt in Figur 1 ein insgesamt mit 1 bezeichnetes Fahrzeug, dessen für die Erfindung wesentliche Rohbauelemente hier eine von einem Schweller 2 bis zu einem Dachträger 3 reichende B-Säule 4 und ein Sitzquerträger 5 sind, der sich zwischen dem Schweller 2 und einem Mitteltunnel 6 erstreckt. An den beiden letztgenannten Rohbauteilen sind Führungsschienen 7, 8 befestigt, in denen ein insgesamt mit 9 bezeichneter Fahrzeugsitz längsverschieblich ist. Diesem zugeordnet ist ein Sicherheitsgurt 10, der mit einem ersten Ende an einer sitzseitigen Gurtverankerung 11 festgelegt ist und an einem zweiten Ende in einen Gurtaufrollautomaten 12 einläuft. Ein in der B-Säule 4 bevorzugt höhenverstellbarer Gurtumlenkbeschlag 13 bestimmt zusammen mit einer in einem Gurtschloß 14 arretierbaren Umlenklasche 15 den Verlauf des Sicherheitsgurtes 10 im angelegten Zustand. Dem Gurtschloß 14 ist hier eine schematisch angedeutete Straffereinrichtung 15 zugeordnet, die ebenso wie ein der Rückenlehne 16 des Fahrzeugsitzes 9 zugeordneter Seitenairbag 17 von einer Steuereinrichtung 18 beaufschlagbar ist. Letztere ist auch an einem Seitenaufprallsensor 19 angeschlossen, der hier auf dem Sitzquerträger 5 befestigt ist.

Es wird hier ausdrücklich darauf hingewiesen, daß die in der Figur 1 dargestellte Anordnung rein schematischer Natur ist und auch nicht auf das konkret gezeigte Ausführungsbeispiel beschränkt ist. So kann beispielsweise der Seitenairbag 17 auch in der B-Säule 4 oder in einer hier nicht weiter dargestellten Fahrzeugtür-Innenverkleidung untergebracht sein. Die Strafferfunktion muß nicht notwendigerweise dem Gurtschloß 14 zugeordnet sein, sondern kann ergänzend oder alternativ auch im Bereich des Verankerungspunktes 11 vorgesehen sein. Ebenso denkbar sind Straffereinrichtungen, die dem Gurtaufrollautomaten 12 in der Weise zugeordnet sind, daß sie der Gurtauszugbewegung entgegen eine Rotation einleiten, die zur Straffung des Sicherheitsgurtes 10 führt. Vorstellbar sind auch den Sicherheitsgurt 10 umfassende Gurtschlaufen, die mittels eines Verstellkolbens aus einer Ruhestellung heraus in der Weise verstellbar sind, daß eine Straffung des Sicherheitsgurtbandes 10 auftritt (siehe hierzu beispielsweise die DE-2423777-C2 oder DE-2428564-A1).

Für die Steuereinrichtung 18 ist in der Zeichnung nur ein Ausschnitt des gesamten Funktionsspektrums gezeigt. Verständlicherweise ist diese Steuereinrichtung auch der in der Zeichnung nicht dargestellten Fahrzeugseite zugeordnet und kann gegebenenfalls auch Bestandteil einer Steuerung sein, die Airbageinrichtungen oder andere Rückhaltesysteme für Frontalaufprallunfälle oder Überschläge mit berücksichtigt.

Die Funktionsweise der in Figur 1 dargestellten Insassenschutzeinrichtung wird nun anhand der Figur 2 näher erläutert. Mit t₀ ist derjenige Zeitpunkt angegeben, zu dem ein Kollisionskörper die Fahrzeugseite beaufschlagt. Je nach Empfindlichkeit und Einbaulage des Seitenaufprallsensors 19 vergeht eine gewisse Zeitspanne, bis zum Zeitpunkt tₓ eine Seitenaufprall-Unfallsituation zweifelsfrei erkannt ist. Zu diesem Zeitpunkt erfolgt die Aktivierung des Seitenairbags 17. Dieser schiebt sich zwischen Bauteile der Fahrzeugseite und dem hier nicht weiter dargestellten Fahrzeuginsassen und übernimmt somit zu einem sehr frühen Zeitpunkt schon Rückhaltefunktionen, und zwar bereits dann, wenn die eigentliche Intrusionsbewegung der B-Säule 4 sich erst in einem Anfangsstadium befindet und noch lange nicht abgeschlossen ist. Diese Intrusionsbewegung der B-Säule 4 führt nun auch dazu, daß der Umlenkbeschlag 13 ins Fahrzeuginnere hinein bewegt wird und damit dem Sicherheitsgurt 10 bereits eine Lose verleiht, bevor dieser seinerseits vom Kollisionskörper ins Fahrzeuginnere hineingeschoben wird. Die Aktivierung des Straffers 15 ist hinsichtlich ihres Zeitpunktes nun so ausgelegt, daß einerseits der Sicherheitsgurt 10 bezogen auf die Intrusionsbewegung der B-Säule 4 eine möglichst große Gurtlose erfährt und andererseits aber der Insasse noch rechtzeitig gegenüber dem Fahrzeugsitz 9 festgehalten wird. Erfinderseitig ist man dabei zu der Erkenntnis gekommen, daß der optimale Zeitpunkt zur Aktivierung der Straffereinrichtung 15 unter Berücksichtigung ihrer Arbeitscharakteristik so zu wählen ist, daß zum Beginn der Seitwärtsverschiebung des Fahrzeugsitzes 9 der Straffvorgang abgeschlossen ist. Die Bestimmung dieses Zeitpunktes kann entweder empirisch fahrzeug- und/oder komponentenspezifisch ermittelt werden oder wie bereits zuvor schon beschrieben durch eine zusätzliche Sensorik erfaßt werden. Hervorzuheben ist an dieser Stelle aber auch, daß beispielsweise für die Straffereinrichtung 15 mechanische Sensorsysteme verwendet werden können, die nicht zwangsläufig mit dem Steuergerät 18 verbunden sein müssen. Diese sind hinsichtlich ihres Ansprechverhaltens aber so auszulegen, daß im Hinblick auf absehbare Unfallszenarien stets eine gegenüber der Airbagzündung zeitlich versetzte Zündung mit vorgegebener Nachzeitigkeit erfolgt.

Die zuvor beschriebenen Verhältnisse gelten prinzipiell auch für Sicherheitsgurteinrichtungen, die sog. Fondsitzbänken zugeordnet sind. Je nach fahrzeugspezifischen Gegebenheiten sind auch hier entsprechende Zeitverhalten einzustellen. Erfinderseitig wird vorgeschlagen, daß für Personenkraftwagen der Zündzeitpunkt t_{y} für die Straffer so gewählt wird, daß sich ein Δt von 0 ms bis 10 ms, vorzugsweise von 4 ms bis 10 ms, ergibt. Für Fahrzeuge der sog. Golf-Klasse wird im Zusammenhang mit der B-Säule ein Δt von 6 bis 8 ms vorgeschlagen.

## Patentansprüche

1. Insassenschutzeinrichtung für ein Fahrzeug (1) mit
- wenigstens einem Seitenairbag (17),
- wenigstens einer Straffereinrichtung (15) für einen Sicherheitgurt (10), der gegenüber einem auf einem Fahrzeugsitz (9) untergebrachten Insassen als Rückhalteelement wirksam ist,
- wenigstens einem Sensor (19) zur Erkennung eines Seitenaufpralls, wenigstens einer die Signale des Sensors (19) zur Aktivierung des Seitenairbags (17) und gegebenenfalls der Straffereinrichtung (15) verarbeitenden Steuereinrichtung (18),
**dadurch gekennzeichnet, daß**
- der Seitenairbag (17) von der Steuereinrichtung (18) vor der Straffereinrichtung (15) aktivierbar ist.

2. Insassenschutzeinrichtung nach Anspruch 1, **dadurch gekennzeichnet, daß** in der Steuereinrichtung ein fahrzeugspezifischer Zeitabstand für die Auslösung des Seitenairbags (17) und der Straffereinrichtung (15) vorgegeben ist.

3. Insassenschutzeinrichtung nach Anspruch 2, **dadurch gekennzeichnet, daß** der vorgesehene Zeitabstand Δt für Personenkraftfahrzeuge in einem Bereich von 0 ms ≤ Δt ≤ 10 ms, vorzugsweise 4 ms ≤ Δt ≤ 10 ms, insbesondere 6 ms ≤ Δt ≤ 8 ms, beträgt.

4. Insassenschutzeinrichtung für ein Fahrzeug (1) mit
- wenigstens einem Seitenairbag (17),
- wenigstens einer Straffereinrichtung (15) für einen Sicherheitgurt (10), der gegenüber einem auf einem Fahrzeugsitz (9) untergebrachten Insassen als Rückhalteelement wirksam ist,
- wenigstens einem Sensor (19) zur Erkennung eines Seitenaufpralls, wenigstens einer die Signale des Sensors (19) zur Aktivierung des Seitenairbags (17) und/oder der Straffereinrichtung (15) verarbeitenden Steuereinrichtung (18), insbesondere nach Anspruch 1, **dadurch gekennzeichnet, daß**
- neben dem wenigstens einen Sensor (19) ein zweiter Sensor vorgesehen ist, durch den der Beginn einer seitlichen Verlagerung des Fahrzeugsitzes (9) vorzeitig erkennbar ist,
- auf Veranlassung des Sensors (15) der Seitenairbag (17) auslösbar ist,
- auf Veranlassung des zweiten Sensors die Straffereinrichtung (15) zeitlich nach dem Seitenairbag (17) aktivierbar ist.

5. Insassenschutzeinrichtung nach wenigstens einem der Ansprüche 1 bis 4, **dadurch gekennzeichnet, daß** die wenigstens eine Straffereinrichtung (15) ein Schloßstraffer ist.

6. Insassenschutzeinrichtung nach wenigstens einem der Ansprüche 1 bis 4, **dadurch gekennzeichnet, daß** die wenigstens eine Straffereinrichtung ein auf einen Gurtaufrollautomaten oder ein mit einer Zugschlaufe auf ein Gurtband wirkender Gurtstraffer ist.

## Claims

1. Vehicle occupant safety device for a vehicle (1) having
- at least one lateral airbag (17),
- at least one tensioning device (15) for a seatbelt (10), which acts as a restraining element on a vehicle occupant located on a vehicle seat (9),
- at least one sensor (19) for detecting a lateral impact, at least one control device (18) which processes the signals of the sensor (19) to activate the lateral airbag (17) and, if appropriate, of the tensioning device (15), **characterized in that**
- the lateral airbag (17) can be activated before the tensioning device (15) by the control device (18).

2. Vehicle occupant safety device according to Claim 1, **characterized in that** a vehicle-specific time interval for the triggering of the lateral airbag (17) and of the tensioning device (15) is predefined in the control device.

3. Vehicle occupant safety device according to Claim 2, **characterized in that** the intended time interval Δt for passenger vehicles is in a range of 0 ms ≤ Δt ≤ 10 ms, preferably 4 ms ≤ Δt ≤ 10 ms, in particular 6 ms ≤ Δt ≤ 8 ms.

4. Vehicle occupant safety device for a vehicle (1) having
- at least one lateral airbag (17),
- at least one tensioning device (15) for a seatbelt (10) which acts as a restraining element on a vehicle occupant located on a vehicle seat (9),
- at least one sensor (19) for detecting a lateral impact, at least one control device (18) which processes the signals of the sensor (19) to activate the lateral airbag (17) and/or of the tensioning device (15), in particular according to Claim 1, **characterized in that**
- in addition to the at least one sensor (19), a second sensor is provided by means of which the start of a lateral displacement of the vehicle seat (9) can be detected in advance,
- the lateral airbag (17) can be triggered by the sensor (15),
- the tensioning device (15) can be activated by the second sensor after the lateral airbag (17).

5. Vehicle occupant safety device according to at least one of Claims 1 to 4, **characterized in that** the at least one tensioning device (15) is a seatbelt pretensioning device.

6. Vehicle occupant protection device according to one of Claims 1 to 4, **characterized in that** the at least one tensioning device is a seatbelt tensioning device which acts on an automatic seatbelt retractor or a seatbelt tensioning device which acts on a seatbelt with a traction loop.

## Revendications

1. Dispositif de protection des occupants d'un véhicule (1) comprenant
- au moins un airbag latéral (17),
- au moins un dispositif tendeur (15) pour une ceinture de sécurité (10) qui sert d'élément de retenue vis-à-vis d'un occupant se trouvant sur un siège (9) du véhicule,
- au moins un capteur (19) servant à détecter un choc latéral,
- au moins un dispositif de commande (18) traitant les signaux du capteur (19) pour l'activation de l'airbag latéral (17) et éventuellement du dispositif tendeur (15),
**caractérisé en ce que**
- l'airbag latéral (17) peut être activé par le dispositif de commande (18) avant le dispositif tendeur (15).

2. Dispositif de protection des occupants selon la revendication 1, **caractérisé en ce que** dans le dispositif de commande est prévu un intervalle de temps spécifique au véhicule pour le déclenchement de l'airbag latéral (17) et du dispositif tendeur (15).

3. Dispositif de protection des occupants selon la revendication 2, **caractérisé en ce que** l'intervalle de temps prévu Δt pour des véhicules de tourisme est compris dans une plage de 0 ms ≤ Δ ≤ 10 ms, de préférence de 4 ms ≤ Δ ≤ 10 ms, en particulier de 6 ms ≤ Δ ≤ 8 ms.

4. Dispositif de protection des occupants d'un véhicule (1) comprenant
- au moins un airbag latéral (17),
- au moins un dispositif tendeur (15) pour une ceinture de sécurité (10), qui sert d'élément de retenue vis-à-vis d'un occupant se trouvant sur un siège (9) du véhicule,
- au moins un capteur (19) servant à détecter un choc latéral,
- au moins un dispositif de commande (18) traitant les signaux du capteur (19) pour l'activation de l'airbag latéral (17) et/ou du dispositif tendeur (15),
en particulier selon la revendication 1, **caractérisé en ce que**
- il est prévu, en plus de l'au moins un capteur (19), un deuxième capteur qui permet de détecter prématurément le début d'un déport latéral du siège (9) du véhicule,
- l'airbag latéral (17) peut être déclenché sur ordre du capteur (19),
- le dispositif tendeur (15) peut être activé dans le temps après l'airbag latéral (17) sur ordre du deuxième capteur.

5. Dispositif de protection des occupants selon au moins l'une des revendications 1 à 4, **caractérisé en ce que** l'au moins un dispositif tendeur (15) est un rétracteur de boucle.

6. Dispositif de protection des occupants selon au moins l'une des revendications 1 à 4, **caractérisé en ce que** l'au moins un dispositif tendeur est un tendeur de ceinture agissant sur un enrouleur automatique de ceinture ou un tendeur de ceinture agissant avec une boucle de traction sur une courroie de ceinture.
